# EUROPEAN PATENT APPLICATION

(11) **EP 2 522 638 A1**
(43) Date of publication of application: **14.11.2012**
(21) Application number: 11165860.5
(22) Date of filing: 12.05.2011
(51) Int. Cl.: C03B 37/08, C03B 37/083

(54) **Reinforcing ribs for bushings tip plate**

(71) Applicant: 3B-Fibreglass SPRL, 4651 Battice (BE)
(72) Inventor: Laurent, Dimitri, 4651, Battice (BE); Simon, Philippe, 4651, Battice (BE)
(74) Representative: BiiP cvba

(57) **Abstract**

The present invention concerns a reinforcing rib (10) for the reinforcement of the tip plate (2) of a bushing assembly (1) for the manufacture of glass fibres, said reinforcement rib having a planar portion (10A) having a shape inscribed in a triangle of vertices α1, α2, α3, wherein α1 is the smallest angle of the three vertices, and the side of the triangle opposed to the smallest vertex, α1, matches exactly one side of the planar portion (10A). It also concerns a bushing assembly comprising a tip plate (2) reinforced with the reinforcing ribs (10) discussed supra.

## Description

### Technical Field

The present invention relates to glass fibre manufacturing equipment. In particular it concerns reinforcing ribs for reinforcing the tip plate of a bushing assembly against creep and sagging.

### Background for the invention

Glass fibres can be produced by melting a glass composition in a melter and drawing them out through the tip plate of a bushing assembly. A bushing assembly is generally in the form of a rectangular box with two pairs of opposed side and end walls forming the perimeter thereof with an opening at the top in fluid communication with the melter. The bottom floor comprises a tip plate which is a plate comprising a multitude of orifices or tips through which the glass melt can flow to form fibres, which are attenuated to reach their desired diameter. To ensure an optimal control of the viscosity, the temperature of the tip plate must be controlled accurately. The temperature of the tip plate depends on the glass melt composition but is generally well above 1000°C. Because of the extreme working conditions, the various components of a bushing assembly are made of platinum or platinum alloys, typically rhodium-platinum alloys.

The load applied on the tip plate is substantial with, on the one hand, the weight of the glass melt lying on top of it and, on the other hand, the drawing force applied to the fibres below. At temperatures well above 1000°C, it is not surprising that tip plates are sensitive to creep and sagging. In order to increase the production rate, larger tip plates are being used which increase the problem of creep and sagging. It has been proposed to reinforce the structure by adding transverse reinforcing ribs distributed along the length of the tip plate. US39791 95 describes such stiffening ribs which are in the shape of rectangular ribs having a T-profils and contribute to stiffening the tip plate in the transverse direction. EP1399393, however, identifies problems with the flexural properties of such stiffening ribs, and proposes to modify their geometry, replacing the rectangular geometry of the ribs by a profile having a variable altitude including at least one apex. This geometry is said to have the advantage that the rib flexural stiffness is highest at the apex which position should correspond to the locus of maximum bending moment. This solution, however, requires the addition of a gable over the ribs known from US3979195, which increases substantially the cost of the bushing assembly. Since the ribs are made of precious metal, such as platinum and alloys thereof, any addition of material has substantial consequences on the production cost of the bushing assembly. It is not always clear that the prolonged service time of the bushing assembly the ribs of EP1399393 afforded compensates for the additional costs of production and material investment.

In some cases, a longitudinal central beam is provided in the centre of the floor to stiffen the tip plate in the longitudinal direction; this configuration corresponds to having two tip plates in parallel separated by a longitudinal beam in a single bushing assembly. Usually, the two tip plate portions and the central beam are made of a single plate folded appropriately. The central beam may, however, be welded to the centre of the top surface of a single tip plate or to the longitudinal edges of two separate tip plates. The central beam, however; is also strained in a three point bending mode and its flexural stiffness is often not sufficient to mechanically stabilise the tip plate in the longitudinal direction over an extended working period. The use of transverse stiffening ribs as disclosed in any of US39791 95 or EP1399393 does not help in supporting the central beam in the longitudinal direction.

The long time stabilization of the tip plate of a bushing assembly against creep and sagging remains a problem to be solved. The present invention proposes a solution to said problem and, in particular, in case a central beam is used to stabilize longitudinally two adjacent tip plates in a single bushing assembly. These and other advantages of the present invention are described in the following sections.

### Summary of the invention

The present invention is defined in the appended independent claims. Preferred embodiments are defined in the dependent claims. In particular, the present invention concerns a reinforcing rib for the reinforcement of the tip plate of a bushing assembly for the manufacture of glass fibres, said reinforcement rib having a planar portion having a shape inscribed in a triangle of vertices 1α, α2, α3, wherein α1 is the smallest angle of the three vertices, and the side of the triangle opposed to the smallest vertex, α1, matches exactly one side of the planar portion.

In a preferred embodiment of the present invention, the planar section of the reinforcing rib comprises four vertices (A, B, C, D). All four sides of the planar section can be straight, thus defining a quadrilateral. One or more sides may, however, be curved as long as the overall planar portion is inscribed in a triangle as defined supra. In particular, the quadrilateral may be a trapezium. The edge of the planar portion corresponding to one of the two sides of the triangle it is inscribed into, which is adjacent to the smallest vertex, α1, spans the width of said tip plate it is designed to reinforce. The edge opposite the triangle smallest vertex, α1, on the other hand, is to be fixed to a side wall of a bushing assembly. In a preferred embodiment, the trapezium is a right trapezium. which altitude (AD) between the parallel bases spans the width of said tip plate. preferably a right trapezium

In the present context, the English sense of the term "trapezium" is used, viz., a quadrilateral having at least one pair of parallel sides -called bases- connected to one another by two so-called legs (in US-English, the term "trapezoid" would be used instead). A "right trapezium" is a trapezium having two right angles. If the two opposed legs of a trapezium are parallel, the trapezium is actually a parallelogram, and if the trapezium is right, it forms a rectangle. In the present context, the two legs of the trapezium are not parallel to one another. The "right leg" of a right trapezium is the leg forming a right angle with both bases, whilst the "non right leg" is the opposed leg.

In a preferred embodiment, the reinforcing rib of the present invention comprises an off-plane portion substantially normal to the planar portion, topping or adjacent to the non right leg of the planar portion, and forming therewith a cross-section, preferably in the shape of a T, Γ F, or double-crossed T.

In order to save precious metal and to allow melt flow across the ribs, it is preferred that the planar portion of the reinforcing rib comprises at least one through opening, generally at least two or more openings.

The present invention also concerns a bushing assembly for the manufacture of glass fibres, comprising a bushing body in the shape of an open box and comprising:
(a) a first pair of opposed side walls defining the longitudinal dimension of the bushing body;
(b)a second pair of opposed end walls defining the transverse dimension of the bushing body and, together with the first pair of side walls, defining the perimeter of the bushing body;
(c) a tip plate comprising a multitude of orifices for drawing glass fibres, said tip plate forming at least part of the bottom floor of the bushing body;
**characterized in that,** it comprises several reinforcing ribs as discussed above, distributed along, and extending transverse to the side walls, one side (CD) of the planar portion thereof adjacent to the smallest vertex, α1, of the triangle it is inscribed into being secured to the top surface of the tip plate and the side (AD) opposite said smallest vertex, α1, being fixed to a side wall.

In a preferred embodiment, the bushing assembly comprises a central beam extending from one end wall to the other, substantially parallel to the side walls and dividing the bushing floor in two portions, preferably of equal areas, each floor portion being formed by a tip plate secured to the beam, wherein the reinforcing ribs are arranged on both floor portions, each rib being fixed to said central beam (1 C)by its shortest side (BC) closest to the smallest vertex, α1. The central beam can be welded to the tip plate or can be an integral part thereof, formed by folding a single plate to form a central ridge flanked on either side by a portion comprising orifices and forming two tip plates. In a preferred embodiment, the ridge of the central beam (1 C) has a Π, or Λ-shaped cross section.

### Brief description of the Figures

For a fuller understanding of the nature of the present invention, reference is made to the following detailed description taken in conjunction with the accompanying drawings in which:
Figure 1 : shows a perspective view of a bushing assembly according to the present invention, comprising a central beam.
Figure 2: shows various embodiments of stiffening ribs according to the present invention.
Figure 3: shows various embodiments of central beam geometries with ribs coupled to both sides thereof.

### Detailed description of the invention

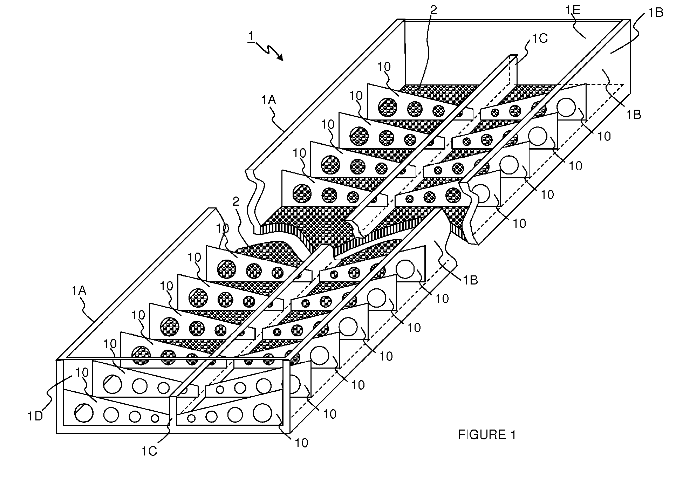

As can be seen in Figure 1, a bushing assembly comprises two side walls (1A, 1 B) and two end walls (1D, 1E) forming the peripheral walls of the assembly. The side walls (1A, 1B) define the longitudinal dimension of the bushing assembly and the end walls (1 D, 1 E) define the transverse dimension. The top surface of the assembly (not shown) is open to bring it in fluid communication with a source of molten glass, typically a furnace. The floor of the bushing assembly comprises a tip plate (2) which comprises a multitude of orifices (2A) allowing the glass melt to flow out and be drawn to form fine glass fibres. In the embodiment illustrated in Figure 1, the floor is divided in two tip plate portions by a central beam (1C) which contributes to the stiffening of the floor in the longitudinal direction. A number of reinforcing ribs (10) are distributed along the length of each tip plate portion, extending transversally from a side wall (1A, 1 B) to the central beam (1 C) to stiffen the floor in the transverse direction, extending preferably substantially normal to said side walls (1A, 1B). In a bushing assembly according to the present invention, the reinforcing ribs (10) have a particular geometry.

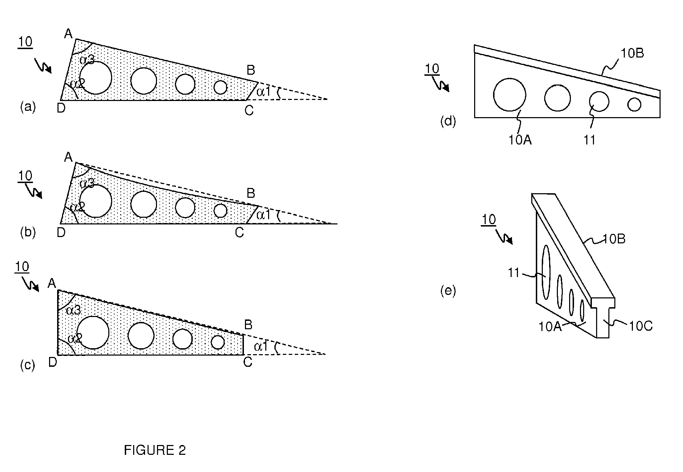

As illustrated in Figure 2, reinforcing ribs according to the present invention have a planar portion (10A) having a shape inscribed in a triangle of vertices α1, α2, α3, wherein α1 is the smallest angle of the three vertices, and the side of the triangle opposed to the smallest vertex, α1, matches exactly one side of the planar portion (10A). In the present context, the usually recognized meaning to the term "inscribed" is used, viz., an "inscribed" planar shape is one that is enclosed by and "fits snugly" inside another geometric shape. As illustrated in Figure 2(a) the rib preferably comprises four vertices (A, B, C, D), but depending on the geometry of the bushing and tip plate, may have a different number of vertices. All sides are preferably rectilinear, with a quadrilateral being preferred, but here again, three sides of a four-vertices shaped rib being coupled with various elements of the bushing such as the side walls (1A, 1B), a central beam (1C) and a tip plate (2), which respective geometries determine the geometry of each side of the reinforcing rib they are to be matchingly coupled to. It follows that if any bushing element to be coupled with one side of a reinforcing rib is curved, the corresponding side of the rib will have the same curvature as said element. As illustrated in Figure 2(b) the "free" side of a four-vertices rib, which is not coupled to any element of the bushing assembly, can show a curvature, as long as the shape remains inscribed in a triangle.

In a preferred embodiment, the planar portion (10A) has the shape of a trapezium, more preferably in the shape of a right trapezium as illustrated in Figure 2(c), which altitude (CD) spans the width of said tip plate (2). The term "right trapezium" is to be construed as defined in the summary of the invention with shortest base (BC), longest base (AD), right leg (CD), corresponding to an altitude of the trapezium, and non right leg (AB) where A-B-C-D are as defined In Figure 2(a)-(c). A trapezium excludes herein a parallelogram and a rectangle or square, none of which could be inscribed in a triangle with the side of the triangle opposed to the smallest vertex, α1, matching exactly one side of the planar portion (10A). The right leg (CD) is secured to the tip plate (2), whilst the longest base (AD) is fixed to a side wall (1A, 1 B).

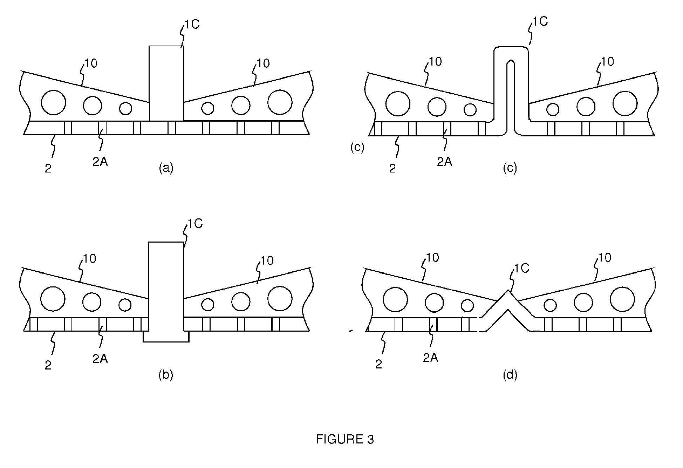

The shortest side (BC) adjacent the smallest angle, α1, is secured to the opposite side wall (1B, 1A) or, preferably, in case the bushing assembly is provided with a central beam (1 C), it is fixed to said central beam as illustrated in Figures 1 and 3. The fixing and securing of the reinforcing ribs (10) to a side wall (1A), the central beam, (1C) and the tip plate (2) (if not continuous therewith) is preferably achieved by welding as well known by the persons skilled in the art. Other fixing means, however, are not excluded, in replacement of or additionally to welding, such as rivets, screws or bolts.

The planar portion (10A) preferably comprises at least one through opening (11). This allows the saving of material, which considering the value of platinum and the number of ribs in a bushing assembly, can reduce the production cost substantially. It also permits a certain flow of glass melt across the ribs, although this is not essential for a good spinning process.

In a preferred embodiment, the reinforcing rib of the present invention further comprises an off-plane portion (10B) substantially normal to the planar portion (10A), topping or adjacent to the non right leg (AB) of the planar portion (10A) thus forming therewith a cross-section (1 0C). The cross section (1 0C) of the rib can have any of a T, ┌, F, or double-crossed T shape.

When reinforcing ribs having a rectangular profile as disclosed in US3979195 or having a profile of varying altitude with an apex as disclosed in EP1390393, act as beams strained by the weight and drawing of the glass melt in a flexural mode with compressive and tensile forces distributed across the altitude of the beam, the reinforcing rib (10) of the present invention is mostly strained in tensile mode, because of the sloping non right leg (AB) acting like the rigging of a suspension bridge. This is particularly advantageous in the embodiment of bushing assembly comprising a central beam (1 C) which is highly sensitive to bending in view of its substantial length, because the reinforcing ribs (10), like in a suspension bridge, support the both tip plate and central beam. Tensile stiffness of the ribs at high temperature is higher than their flexural stiffness, so that the geometry of the present reinforcing rib contributes to increasing the service time of a bushing assembly. When sandwiched between two reinforcing ribs (10), the central beam (1C) is literally suspended by means of the slanted non right legs (AB). When the off-plane portion (10B) is used in the prior art reinforcing means reviewed supra to increase the bending moment thereof, it is used herein to increase the tensile strength of the rib.

As discussed supra, the side (AB) of the planar portion (10a) of the reinforcing rib is not necessarily straight and may comprise some curvature, either convex or concave, as long as it defines a line of tensile support to the tip plate or central beam (cf. Figure 2(b)). The reinforcing rib (10) is preferably made of a precious metal such as platinum and alloys thereof.

As mentioned above, the central beam (1 C) can be fixed to the tip plate (2) by welding. In one embodiment, a beam (1 C) is secured to the top surface of a single tip plate (2), dividing the latter in two portions as illustrated in Figure 3(a). In the present context, the expression "tip plate" or "tip plate portion" refer to a portion of a plate comprising an array of orifices (2A) or tips. In a second embodiment, one side edge of two tip plates (2) are secured to either side of a beam as illustrated in Figure 3(b). As illustrated, the beam may comprise a longitudunal support ledge on each side on which the tip plate portions can rest to provide sufficient contact area for the welding and ensuring mechanical stability and liquid tightness. In a preferred embodiment, the central beam (1 C) is integral with the tip plates (2) extending on either side thereof. In this embodiment, illustrated in Figures 3(c)&(d); the central beam is formed by folding a plate so as to form a longitudinal ridge. In Figure 3(c) the folding is square (Π-cross section) and in Figure 3(d) it comprises one apex (A-cross section), but it is clear that any geometry enhancing the bending moment can be used, such as, e.g., forming a T or π.

A bushing assembly according to the present invention has a prolonged service time thanks to the geometry of the reinforcing ribs used to stiffen and mechanically stabilize the tip plate against creep and sagging.

## Claims

1. A reinforcing rib (10) for the reinforcement of the tip plate (2) of a bushing assembly (1) for the manufacture of glass fibres, said reinforcement rib having a planar portion (10A) having a shape inscribed in a triangle of vertices α1, α2, α3, wherein α1 is the smallest angle of the three vertices, and the side of the triangle opposed to the smallest vertex, α1, matches exactly one side of the planar portion (10A).

2. A reinforcing rib according to claim 1, wherein the planar section (10A) comprises four vertices (A, B, C, D) and wherein all four sides are preferably straight, thus defining a quadrilateral.

3. A reinforcing rib according to the previous claim, wherein the planar section (10A) is in the shape of a trapezium, preferably a right trapezium which altitude (AD) between the parallel bases spans the width of said tip plate (2).

4. Reinforcing rib according to any of the preceding claims, further comprising an off-plane portion (10B) substantially normal to the planar portion (10A), topping or adjacent to the non right leg (AB) of the planar portion (10A), and forming therewith a cross-section (1 0C) preferably in the shape of a T, ┌, F, or double-crossed T.

5. Reinforcing rib according to any of the preceding claims, wherein the planar portion (10A) comprises at least one through opening (11).

6. Bushing assembly (1) for the manufacture of glass fibres, comprising a bushing body in the shape of an open box and comprising:
(a) a first pair of opposed side walls (1A, 1 B) defining the longitudinal dimension of the bushing body;
(b) a second pair of opposed end walls (1 D, 1 E) defining the transverse dimension of the bushing body and, together with the first pair of side walls, defining the perimeter of the bushing body;
(c) a tip plate (2) comprising a multitude of orifices for drawing glass fibres, said tip plate forming at least part of the bottom floor of the bushing body;
**characterized in that,** it comprises several reinforcing ribs (10) according to any of the preceding claims, distributed along, and extending transverse to the side walls (1A, 1 B), one side (CD) of the planar portion (10a) thereof adjacent to the smallest vertex, α1, of the triangle it is inscribed into being secured to the top surface of the tip plate (2) and the side (AD) opposite said smallest vertex, α1, being fixed to a side wall (1A, 1 B).

7. Bushing assembly according to the preceding claim, further comprising a central beam (1 C) extending from one end wall (1D, 1 E) to the other, substantially parallel to the side walls (1A, 1B) and dividing the bushing floor in two portions, preferably of equal areas, each floor portion being formed by a tip plate (2) secured to said central beam, wherein the reinforcing ribs (10) are arranged on both floor portions, each rib being fixed to said central beam (1 C) by its shortest base (BC).

8. Bushing assembly according to the previous claim, wherein the central beam (1C) is integral with the tip plates extending on either side thereof and is formed by folding a plate to form a ridge of desired cross-section.
